# FASCICULE DE BREVET EUROPEEN

(11) **EP 0 473 224 B1**
(45) Date de publication et mention de la délivrance du brevet: **28.02.1996**
(21) Numéro de dépôt: 91202109.4
(22) Date de dépôt: 19.08.1991
(51) Int. Cl.: C08G 61/12, C08L 27/12, H01B 3/44

(54) **Mélanges de polymères polaires et de polymères conducteurs dédopés, procédés d'obtention de ces mélanges et utilisation de ces mélanges pour fabriquer des dispositifs électroniques optoélectriques, électrotechniques et électromécaniques**
Mischungen aus polaren Polymeren und elektrisch fähigen dedopierten Polymeren, Verfahren zur Herstellung dieser Mischungen und Verwendung dieser Mischungen in elektronischen optoelektrischen elektrotechnischen und elektromechanischen Gegenständen
Blends of polar polymers and electrically conductive dedoped polymers, process for preparing these blends and use of these blends for making electronic, optoelectrical, electrotechnical and electromechanical devices

(30) Priorité: 30.08.1990 BE 9000838
(43) Date de publication de la demande: 04.03.1992
(73) Titulaire: SOLVAY (Société Anonyme), B-1050 Bruxelles (BE); ALCATEL CABLE(Société Anonyme), F-92111 Clichy Cédex (FR)
(72) Inventeur: Hannecart, Etienne, B-3080 Tervuren (BE); Franquinet, Claude, B-1140 Bruxelles (BE)
(74) Mandataire: Lechien, Monique

(56) Documents cités:
- WPIL, FICHIER PRODUIT, AN=86-192278/30, Derwent Publications Ltd, Londres, GB; & JP-A-61 123 637 (TEIJIN K.K.) 11-06-1986

## Description

La présente invention se rapporte à des mélanges de polymères comprenant d'une part des polymères fluorés traditionnels notamment des homo- ou copolymères du fluorure de vinylidène et d'autre part des polymères polarisables appartenant à la classe des polymères dits "conducteurs" mais dédopés, à des procédés d'obtention de tels mélanges et à leur utilisation dans des dispositifs électroniques, optoélectriques et électrotechniques et électromécaniques.

Il existe actuellement un certain nombre de polymères tels que les polyacétylènes, polypyrroles, polyindoles, polyphénylènes et polythiophènes, qui lorsqu'ils sont obtenus par voie électrochimique ou par voie chimique en présence de certains agents chimiques, appelés dopants, possèdent des propriétés de conductivité qui font que ces polymères ont un certain nombre d'applications notamment comme dispositifs de stockage d'énergie (accumulateurs, piles rechargeables, capacités,...) ou comme dispositifs électrochromiques ou encore comme dispositifs effectivement conducteurs selon l'état d'oxydation et de réduction dans lequel ils se trouvent.

Lorsque l'on soumet ces polymères à une opération de dédopage, ces polymères "conducteurs" perdent leurs propriétés conductrices et deviennent, tout comme les polymères traditionnels, des polymères non conducteurs. Cette propriété n'a apparemment jamais conduit à une quelconque utilisation industrielle particulière car sans intérêt direct du fait que les polymères traditionnels sont déjà des produits isolants et peuvent être obtenus dans des conditions économiques.

D'autre part, il existe des polymères fluorés homo- ou copolymères dits "traditionnels" qui sont généralement connus pour leurs propriétés de résistance à la chaleur et pour leur inertie envers les réactifs chimiques. Certains de ces polymères polaires fluorés tels que les polymères dérivés du fluorure de vinylidène possèdent en outre des propriétés particulières telles que la piezoélectricité, la pyroélectricité, la ferroélectricité et une certaine diélectricité. De telles propriétés et notamment la ferroélectricité observée avec des copolymères de fluorure de vinylidène et de trifluorure de vinylidène dont la température de Curie est inférieure à leur température de fusion, ont été décrites dans le brevet Etats-Unis 4.731.754 et ont été utilisées pour faire des disques optiques à mémoire effaçable.

Les niveaux piézoélectriques, pyroélectriques, ferroélectriques et diélectriques obtenus avec de tels polymères sont toutefois relativement modérés et en tout cas propres et tributaires de la nature chimique exacte du polymère ou des copolymères envisagés.

On a maintenant trouvé qu'il est possible d'augmenter les valeurs piézo-, pyro-, ferro- et/ou diélectriques de ces polymères si l'on construit des mélanges intimes de ces polymères avec des polymères "conducteurs" dédopés. En outre, ces paramètres peuvent être quantitativement modifiés en modulant à volonté les rapports des deux types de polymères présents dans les mélanges.

La présente invention concerne donc plus particulièrement des mélanges de polymères dits "conducteurs" et de polymères fluorés, dans lesquels le polymère conducteur est dédopé. De préférence le polymère "conducteur" est dédopé de façon permanente. Dans ces conditions les mélanges obtenus possèdent des propriétés exaltées des effets piézo-, pyro-, ferro- et diélectriques, ce qui peut être mis à profit dans de nombreux domaines tels que ceux des capacités, des détecteurs, des actionneurs ainsi que des modulateurs et des commutateurs électrooptiques faisant intervenir, des interactions optiques diverses, notamment, les effets KERR et POCKELS.

En effet, de par les propriétés engendrées par le dédopage de l'entité "polymère conducteur" du mélange de polymères envisagés, il devient possible de créer des mélanges de polymères qui possèdent des propriétés qualitativement et quantitativement différentes des deux types de polymères individuels et cela dans une mesure contrôlable.

Par polymères conducteurs on entend tout polymère possédant une conductivité qui est introduite, par le transfert d'électrons entre la chaine polymérique et un agent dopant réducteur ou oxydant ou encore par une électrode appropriée, dans la chaine polymèrique par la présence d'ions inorganiques ou organiques qui peuvent être éliminés sans affecter la structure moléculaire de base de la construction polymèrique. Des polymères de ce type sont notamment les polyacétylènes, les polypyrroles, les polyindoles, les polyanilines, les polyphénylènes et les polythiophènes, homo- ou copolymères dont on a réduit la conductivité, par dédopage classique ou par tout procédé approprié, à une valeur inférieure à 10⁻⁴ S.cm⁻¹ et de préférence inférieure à 10⁻⁶ S.cm⁻¹.

Une catégorie de polymères conducteurs ayant donné de bons résultats sont les polythiophènes et plus particulièrement des polythiophènes possédant une chaîne latérale en position 3 et/ou en position 4 sur le cycle du thiophène et contenant éventuellement des atomes d'halogène. Plus particulièrement préférés sont des polymères "conducteurs" dérivés de polythiophènes contenant une chaîne latérale en position 3 sur le cycle de thiophène.

Généralement cette chaîne latérale est une chaîne alkyle. Habituellement c'est une chaîne alkyle de C₁ à C₁₂ pouvant éventuellement contenir des atomes d'halogène tels que le chlore ou le fluor. De préférence cette chaîne latérale est une chaîne alkyle de C₁ à C₁₀ pouvant éventuellement contenir des atomes de fluor. De manière particulièrement préférée les polymères conducteurs sont les polythiophènes tels que le poly 3-octylthiophène, les polythiényléthers et les polyfluorothiényléthers tel le poly 4-fluorobenzyl 2-(3'-thiényl) éthyl éther, les polythiophènes qui sont décrits dans la demande de brevet français n° 9109715 inclus par référence, et qui sont des polymères d'oxyde d'alcoyles fluorés et de 3-thiényle.

Enfin des bons résultats ont été obtenus avec les polymères du 3-octylthiophène, les polymères du 4-fluorobenzyl 2-(3'-thiényl) éthyl éther, les polymères de l'oxyde de 2,2,2-trifluoréthyle et de 3-thiényle, les polymères de l'oxyde de 4,4,4,3,3,2,2-heptafluoro-n-butyle et de 3-thiényle et les polymères de l'oxyde de 8,8,8,7,7,6,6,5,5,4,4,3,3,2,2-pentadécafluoro-n-octyle et de 3-thiényle.

De manière particulièrement préférée on utilise comme polymères fluorés des homo- ou copolymères "traditionnels" tels que les homo- ou copolymères du fluorure de vinylidène.

Des polymères préférés de ce type sont les homopolymères de fluorure de vinylidène, les copolymères du fluorure de vinylidène et de trifluoroéthylène et les terpolymères à base de fluorure de vinylidène, de trichloroéthylène et de chlorotrifluoroéthylène. De bons résultats ont été obtenus avec le copolymère de fluorure de vinylidène et de trifluoroéthylène (75/25).

Les mélanges de polymères "conducteurs" et de polymères fluorés sont conçus sur base de la compatibilité chimique des deux types de polymères mis en oeuvre. Ainsi lorsque le polymère fluoré est un homo- ou copolymère fluoré "traditionnel", on introduit de préférence comme partenaire "conducteur" les polymères dérivés de thiophènes tels que le poly 3-octylthiophène ou les polythiophènes fluorés cités et préférés ci-avant.

Le dédopage de la partie polymère "conducteur", quoique essentiel pour l'obtention des mélanges selon l'invention, peut être réalisé par toute méthode connue et à tout moment pour autant que la conductivité de l'entité conductrice soit réduite à des valeurs au moins inférieures à 10⁻³ S.cm⁻¹. Ainsi le dédopage du polymère "conducteur" peut être réalisé avant que le mélange des deux types de polymères soit formé. Dans une autre exécution, le dédopage du polymère "conducteur" est effectué après que le mélange des deux types de polymères soit réalisé. Une méthode ayant donné de bons résultats consiste à dédoper les mélanges de polymères préalablement dissous dans un solvant commun ou mis en suspension dans un non-solvant. Une méthode ayant donné de bons résultats consiste à dédoper le polymère "conducteur" avant que le mélange des deux types de polymères soit formé; ce dédopage peut être réalisé par une mise en suspension du polymère dopé dans un alcool, tel que le méthanol, ou dans de l'eau, sous atmosphère inerte, de préférence sous azote, et sous agitation.

L'invention concerne également les procédés pour l'obtention des mélanges de polymères conducteurs dédopés et de polymères fluorés.

Un procédé permettant d'obtenir les mélanges selon l'invention consiste à réaliser la polymérisation du polymère "conducteur", par voie chimique en présence d'une poudre du polymère polaire d'une granulométrie qui est fonction de la nature exacte des deux polymères, dans un liquide qui est un non-solvant des deux types de polymères, à récupérer le mélange de polymères précipité par filtration, à dissoudre le précipité obtenu dans un solvant commun des deux polymères et à mettre en oeuvre la solution obtenue.

Un procédé de ce type a donné de bons résultats lorsqu'il est appliqué à un mélange d'un homopolymère du fluorure de vinylidène en poudre introduit dans un milieu de polymérisation à base de 4-fluorobenzyl 2-(3'-thiényl) éthyl éther.

Un autre procédé permettant d'obtenir des mélanges selon l'invention consiste à réaliser la polymérisation du polymère "conducteur" seul, à le dédoper, puis à mélanger le polymère "conducteur" dédopé et le polymère fluoré, à malaxer le mélange ainsi obtenu et à le mettre en oeuvre.

L'invention concerne également l'utilisation des mélanges de polymères conducteurs dédopés et de polymères fluorés pour la fabrication de dispositifs électroniques, optoélectroniques, électrotechniques et électromécaniques.

En fonction des applications on fait en général appel à des couches minces, régulières, homogènes et de surfaces variables dont l'épaisseur peut varier entre 0,01 micron et 100 microns. L'invention concerne donc également les procédés d'obtention de films minces avec des mélanges de polymères conducteurs dédopés et de polymères fluorés.

Un procédé de préparation de films minces ayant donné de bons résultats consiste à dissoudre et/ou à mettre en suspension le mélange de polymères fluorés et de polymères dédopés dans un solvant commun, et à étaler la partie soluble obtenue, au travers ou non d'un masque sérigraphique, sur un support tel que du verre ordinaire, de la silice ou du polyester et à étaler cette solution à l'aide d'une racle ou d'une tournette de préférence dans une hotte à flux laminaire. Les films ainsi obtenus peuvent être utilisés soit libres, c'est-à-dire détachés de leur support, soit supportés, c'est-à-dire adhérents à leur support. Ces films peuvent être aisément métallisés.

Les films libres peuvent notamment être utilisés dans la fabrication de diélectrique.

Les mélanges de l'invention et plus particulièrement les films tels qu'obtenus selon la méthode décrite, peuvent être utilisés tels quels pour leurs propriétés piézo-,pyro-, ferro- et di-électrique, être cobobinés, extrudés, ou étalés en une ou plusieurs couches pour construire les dispositifs dans lesquels ces propriétés sont mises à profit.

Les mélanges selon l'invention présentent des propriétés remarquables, telles que principalement une permittivité diélectrique élevée et constante dans un domaine de température de 20 à 80 °C et pour des fréquences de 1 à 100 KHz.

Les mélanges selon l'invention sont utilisés également lors de la fabrication de capacités qui présentent donc une permittivité diélectrique élevée et constante.

L'invention est illustrée par les exemples ci-après.

### Exemple 1 : Préparation d'un mélange de polyfluorure de vinylidène et du poly 4-fluorobenzyl 2-(3'-thiényl) éthyl éther (PThArF)

### a. Préparation du poly 4-fluorobenzyl 2-(3'-thiényl)éthyl éther

Un ballon de 500 ml à 4 cols muni d'un thermomètre, d'un robinet à 3 voies, d'un agitateur et d'un septum permettant d'y planter une aiguille reliée à une seringue doseuse, maintenu à -25°C au moyen d'un bain thermostatique, est purgé par un cycle de trois vides et trois rinçages à l'azote pur et sec.

Dans ce ballon, maintenu sous atmosphère d'azote, on introduit 80 ml d'acétonitrile et 0,65 g de polyoxyde d'éthylène (Polyox WSRN 12K PEO) sous agitation.

Pendant que le tout est maintenu sous agitation, on introduit ensuite 7 g de FeCl₃ anhydre.

On introduit ensuite dans ce milieu via la seringue doseuse, 20 ml d'acétonitrile dans lesquels sont dissous 1 g de 4 fluorobenzyl 2-(3'thiényl) éthyl éther, en 10 minutes.

Le ballon est ensuite maintenu sous agitation à -25°C pendant 5 heures.

On obtient une suspension contenant 1 g de polymère dopé pour 100 ml de milieu.

### b. Dédopage

Tout en maintenant la suspension telle qu'obtenue ci-dessus à -25°C sous azote et sous agitation, on introduit 50 ml de méthanol lentement en 40 minutes dans le ballon.

Ensuite on maintient l'agitation durant 20 minutes puis on filtre sur papier à 20°C et sous air.

Le produit obtenu est lavé 4 fois par 50 ml de méthanol, puis séché sous vide de 20 mm Hg à 20°C.

On obtient 0,92 g de produit dédopé (PThArF dédopé) qui présente une conductivité comprise en 10⁻⁶ à 10⁻⁷ S/cm.

### c. Préparation du mélange

Dans un erlenmeyer on introduit 10 g de polyfluorure de vinylidène (PVDF) de marque SOLEF 1010 qui sont mis en solution dans 100 ml de diméthylformamide. La solution est maintenue à 20°C sous bonne agitation pendant deux heures.

On effectue différentes solutions de 1 à 10 % de produit dédopé obtenu (PThArF) dans la diméthylformamide. La solution est maintenue sous agitation pendant deux heures à 20°C.

On réalise le mélange de ces deux solutions en transvasant goutte à goutte et sous bonne agitation la solution de PThArF dédopé dans la solution de PVDF dans les proportions précisées au tableau 1. L'agitation est maintenue pendant une heure à 20°C.

### d. Fabrication d'un film

La solution obtenue précédemment est étalée sur un support en verre au moyen d'une racle couteau à hauteur variable (la variation de la hauteur du couteau se fait à l'aide de deux vis micrométriques).

On dépose quelques cm³ de la solution devant la racle et on la déplace avec une vitesse 10 cm par seconde.

Le film obtenu est mis à sécher dans une étuve à vide à 50°C sous 20 mm Hg pendant 30 minutes.

On obtient un film de 30 à 35 µm qui peut être détaché du support et qui présente une conductivité de 10⁻¹⁰ à 10⁻¹ S/cm.

### e. Propriétés diélectriques

Les mesures des permittivités diélectriques ε et de la tangente de l'angle de perte tgδ à différentes températures et pour des fréquences de 1 à 100 KHz ont été réalisées sur des films minces. Les mesures ont été réalisées sur des échantillons de 6 cm de surface, métallisées par une couche de 500 Å d'aluminium.

Les échantillons sont placés dans une enceinte climatique et mesurés au moyen d'un pont de mesures (type Général Radio N° 1689).

Les résultats sont rassemblés dans le tableau 1.

**TABLEAU 1**

| N° | FILMS proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | PVDF | 32 | 2,8 10⁻¹ | 5 | 5 | 5 | 0,015 | 0,020 | 0,06 |
| | | | | | | | | | |
| 2 | PVDF/PThArF 99/1 | 35 | 5,6 10⁻¹ | 6 | 6 | 5,5 | 0,025 | 0,025 | 0,06 |
| 3 | PVDF/PThArF 90/10 | 30 | 2,3 10⁻¹¹ | 7 | 6 | 5,5 | 0,090 | 0,070 | 0,060 |
| 4 | PVDF/PThArF 80/20 | 35 | 1,4 10⁻¹⁰ | 9 | 7 | 6 | 0,10 | 0,10 | 0,10 |
| 5 | PVDF/PThArF 75/25 | 35 | 6,7 10⁻¹ | 18 | 12 | 8 | 0,25 | 0,25 | 0,25 |
| 6 | PVDF/PThArF 65/35 | 35 | 4,4 10⁻¹¹ | 45 | 25 | 15 | 0,7 | 0,4 | 0,3 |
| 7 | PVDF/PThArF 50/50 | 35 | 5,0 10⁻¹¹ | 90 | 45 | 25 | 0,80 | 0,50 | 0,40 |
| | | | | | | | | | |
| 8 | PThArF | 32 | 1,3 10⁻¹¹ | 793 | 380 | 151 | 0,51 | 0,56 | 0,93 |

### Exemple 2

On réalise un exemple comparable à celui de l'exemple 1, mais en mettant en oeuvre 0,65 g de perfluoroalkylsulfonate de potassium (FLUORAD FC 98) en lieu et place du polyoxyde d'éthylène et le copolymère VF2-TrFE (75/25) copolymère de fluorure de vinylidène et de trifluoroéthylène en lieu et place du polyfluorure de vinylidène (PVDF).

Les résultats sont rassemblés dans le tableau 2.

**TABLEAU 2**

| N° | FILMS proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | VF2-TrFE | 30 | 2,1 10⁻¹³ | 12 | 11 | 11 | 0,050 | 0,050 | 0,15 |
| | | | | | | | | | |
| 2 | VF2-TrFE/PThArF 99/1 | 35 | 3,5 10⁻¹¹ | 8 | 8 | 7,5 | 0,025 | 0,040 | 0,090 |
| 3 | VF2-TrFE/PThArF 80/20 | 31 | 3,3 10⁻⁸ | 12 | 10 | 8 | 0,20 | 0,20 | 0,20 |
| 4 | VF2-TrFE/PThArF 75/25 | 35 | 3,3 10⁻⁷ | 38 | 30 | 25 | 0,25 | 0,15 | 0,15 |
| 5 | VF2-TrFE/PThArF 65/35 | 35 | 3,3 10⁻⁷ | 63 | 53 | 40 | 0,35 | 0,30 | 0,20 |

### Exemple 3

### a. Polymérisation du poly 3-octylthiophène (POTh)

Comme réacteur, on utilise un ballon de 3 l à 5 cols, munis, respectivement, d'un robinet à 3 voies, d'un thermomètre, d'un réservoir à robinet de 250 ml surmonté d'un robinet à 3 voies, d'un septum permettant de planter une aiguille reliée à une seringue doseuse de 50 ml et d'un agitateur.

Ce ballon équipé de son agitateur est placé dans un bain thermostatique et est purgé par un cycle de 3 vides et 3 remplissages a l'azote pur et sec.

Dans ce ballon maintenu à 5°C sous azote, on introduit 850 ml de chloroforme préalablement dégazé à l'azote puis, sous agitation, on ajoute 94 g de chlorure ferrique anhydre.

Ensuite, on remplit la seringue doseuse avec 20 ml d'eau déminéralisée et dégazée, puis le réservoir à robinet avec 150 ml de chloroforme et 11 g de 3-n-octylthiophène distillé et dégazé.

On introduit en parallèle et en 10 minutes dans le ballon l'eau à l'aide de la seringue, le chloroforme et le 3-n-octylthiophène à l'aide du réservoir à robinet.

Le ballon est ensuite maintenu sous agitation à 5° C pendant deux heures.

On obtient une suspension contenant 12 g de polymère dopé pour 1020 ml de milieu.

### b. Dédopage

Tout en maintenant la suspension décrite ci-dessus à 5°C sous azote et sous agitation, on introduit 200 ml de méthanol en 40 minutes.

On maintient l'agitation pendant 20 minutes puis on filtre sur papier à 20°C et sous air.

Le produit obtenu est lavé à 20°C 3 fois par 200 ml de méthanol, puis lavé une fois par 200 ml de méthanol, à chaud et à reflux, pendant 2 heures dans un ballon de 500 ml surmonté d'un réfrigérant.

On termine par un lavage à 20°C par 200 ml de méthanol, on filtre et on sèche sous vide de 20 mm Hg à 20°C.

On obtient 9 g de produit dédopé qui présente une conductivité de 10⁻⁷ à 10⁻⁸ S/cm.

### c. Préparation du mélange

On introduit dans un erlenmeyer 10 g de polyfluorure de vinylidène (PVDF) de marque SOLEF 1010 et 100 ml de diméthylformamide.
La solution obtenue est maintenue à 20°C sous bonne agitation pendant 2 heures.

On effectue une solution de 1 % de POTh dans du chloroforme. La solution est maintenue sous agitation pendant deux heures. La solution est ensuite filtrée sur papier et concentrée 20 fois à l'évaporateur rotatif.

On réalise le mélange de ces deux solutions en transvasant goutte à goutte et sous bonne agitation la solution de POTh dans la solution de PVDF dans les proportions précisées aux tableaux 3 et 4. On maintient l'agitation pendant 1 heure à 20°C.

### d. Fabrication d'un film ou d'une plaque

### 1) Obtention d'un film

La solution obtenue précédemment est étalée sur un support en verre au moyen d'une racle couteau à hauteur variable (la variation de la hauteur du couteau se fait à l'aide de deux vis micrométriques).

On dépose quelques cm³ de la solution devant la racle et la déplace avec une vitesse de 10 cm par seconde.

Le film obtenu est mis à sécher dans une étuve à vide à 20°C sous 20 mm Hg pendant 30 minutes.

On obtient un film de 30 à 35 µm qui peut être détaché du support et qui présente une conductivité de 10⁻¹⁰ à 10⁻¹ S/cm.

### 2) Obtention d'une plaque

Les polymères en poudre polyfluorure de vinylidène (PVDF) de marque SOLEF 1010 et le poly 3-octylthiophène (POTh) sont mélangés mécaniquement entre eux suivant les rapports désirés.

Les mélanges de poudres ainsi obtenus sont ensuite malaxés sur un micromalaxeur à 180°C pendant 2 minutes. Le mélange obtenu est pressé entre deux plaques en acier inox à 180°C et 200 kg par cm pendant 3 minutes (une minute de préchauffage à 50 kg par cm et 2 minutes à 200 kg par cm). L'ensemble est ensuite refroidi rapidement (environ une minute). On obtient ainsi une plaque de 120 à 150 µm d'épaisseur.

### e. Propriétés diélectriques

Les mesures des permittivités diélectriques ε et de la tangente de l'angle de perte tgδ à différentes températures et pour des fréquences de 1 à 100 KHz ont été réalisées soit sur des films minces, soit sur des plaques. Pour les films, les mesures ont été réalisées sur des échantillons de 6 cm de surface, métallisées par une couche de 500 Å d'aluminium. Pour les plaques, les mesures ont été réalisées sur des échantillons de 10 cm placés entre deux électrodes en aluminum.

Les échantillons sont placés dans une enceinte climatique et mesurés au moyen d'un pont de mesures (type Général Radio n^{°} 1689).

Les résultats sont rassemblés dans le tableau 3 pour les films et le tableau 4 pour les plaques.

**TABLEAU 3**

| N° | FILMS proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | PVDF | 32 | 2,8 10⁻¹ | 5 | 5 | 5 | 0,015 | 0,020 | 0,060 |
| | | | | | | | | | |
| 2 | PVDF/POTh 99/1 | 30 | 2,3 10⁻¹ | 6 | 6 | 5,5 | 0,025 | 0,30 | 0,70 |
| 3 | PVDF/POTh 90/10 | 30 | 2,1 10⁻¹⁴ | 8 | 7 | 6 | 0,050 | 0,080 | 0,10 |
| 4 | P0Th | 30 | 7,9 10⁻⁸ | 150 | 70 | 25 | 1 | > 1 | > 1 |

**TABLEAU 4**

| N° | PLAQUES proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | PVDF | 120 | 2,8 10⁻¹ | 7,5 | 7,5 | 7 | 0,15 | 0,290 | 0,10 |
| | | | | | | | | | |
| 2 | PVDF/POTh 99/1 | 135 | 1,9 10⁻¹ | 10 | 10 | 9 | 0,025 | 0,030 | 0,10 |
| 3 | PVDF/POTh 90/10 | 135 | 2,8 10⁻⁷ | 21 | 15 | 12 | 0,40 | 0,20 | 0,20 |
| 4 | PVDF/POTh 80/20 | 130 | 4 10⁻⁸ | 22 | 18 | 12 | 0,25 | 0,20 | 0,15 |

### Exemple 4

On réalise un exemple comparable à celui de l'exemple 3, mais en mettant en oeuvre le copolymère VF2-TrFE (75/25) copolymère de fluorure de vinylidène et de trifluoroéthylène en lieu et place du polyfluorure de vinylidène.

Les résultats sont rassemblés dans le tableau 5 pour les films et le tableau 6 pour les plaques.

**TABLEAU 5**

| N° | FILMS proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 4 | POTh | 30 | 7,9 10⁻⁸ | 150 | 70 | 25 | 1 | > 1 | > 1 |
| | | | | | | | | | |
| 1 | VF2-TrFE | 30 | 2,1 10⁻¹³ | 8 | 8 | 8 | 0,020 | 0,030 | 0,15 |
| 2 | VF2-TrFE/POTh 99/1 | 30 | 5,6 10⁻¹¹ | 9 | 8 | 7 | 0,030 | 0,040 | 0,15 |
| 3 | VF2-TrFE/POTh 90/10 | 30 | 5 10⁻¹ | 10 | 9,5 | 9 | 0,10 | 0,15 | 0,10 |

**TABLEAU 6**

| N° | PLAQUES proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | VF2-TrFE | 120 | 2,1 10⁻¹³ | 6 | 6 | 6 | 0,050 | 0,050 | 0,050 |
| | | | | | | | | | |
| 2 | VF2-TrFE/POTh 99/1 | 120 | 3,7 10⁻¹⁰ | 9 | 8 | 7 | 0,040 | 0,040 | 0,10 |
| 3 | VF2-TrFE/POTh 90/10 | 130 | 1 10⁻¹¹ | 10 | 7 | 6 | 0,20 | 0,15 | 0,15 |
| 4 | VF2-TrFE/POTh 80/20 | 130 | 2 10⁻¹¹ | 20 | 9 | 6 | 0,65 | 0,30 | 0,30 |

### Exemple 5

### a. Polymérisation de l'oxyde de 2,2,2-trifluoroéthyle et de 3-thiényle (PTHOF)

Comme réacteur, on utilise un ballon de 500 ml muni d'un robinet à trois voies, d'un agitateur et d'un septum permettant d'y planter une aiguille reliée à une pompe doseuse.

Le ballon est purgé par un cycle de trois vides et trois rinçages à l'azote pur et sec.

Dans ce ballon, maintenu à -20°C sous azote, on introduit 80 ml de chloroforme et 22 g de chlorure ferrique anhydre, le tout sous agitation.

On introduit ensuite dans le milieu, via la pompe doseuse, 20 ml de chloroforme et 2,5 g d'oxyde de 2,2,2-trifluoroéthyle et de 3-thiényle, le tout en 10 minutes.

Le ballon est maintenu sous agitation à -20°C pendant deux heures.

On obtient une suspension contenant 2,5 g de polymère dopé pour 100 ml de milieu.

### b. Dédopage

Tout en maintenant la suspension telle qu'obtenue ci-dessus à -20°C sous azote et sous agitation, on introduit 50 ml d'eau lentement en 20 minutes dans le ballon.

Ensuite on maintient l'agitation durant 20 minutes puis on filtre sur papier à 20°C et sous air.

Le produit obtenu est lavé 4 fois avec 50 ml d'eau puis séché sous vide de 20 mm de Hg à 20°C.

On obtient 2,1 g de polymère dédopé qui présente une conductivité de l'ordre de 10⁻⁶ S/cm.

### c. Préparation du mélange

Dans un erlenmeyer on introduit une solution de 10 g de polyfluorure de vinylidène (PVDF) de marque SOLEF 1010 dans 100 ml de diméthylformamide. La solution est maintenue à 20°C sous bonne agitation pendant deux heures.

On effectue une solution du polymère dédopé tel qu'obtenu ci-dessus à 5 % dans la diméthylformamide. La solution est maintenue à 20°C sous bonne agitation pendant deux heures.

On réalise le mélange des deux solutions, dans le rapport désiré, en transvasant goutte à goutte et sous bonne agitation la solution de polymère dédopé PTHOF dans la solution de PVDF. L'agitation est maintenue pendant une heure à 20°C.

### d. Fabrication d'un film

La solution obtenue précédemment est étalée sur un support en verre au moyen d'une racle couteau à hauteur variable. La fixation de la hauteur du couteau se fait à l'aide de deux vis micrométriques.

On dépose quelques cm³ de la solution devant la racle et on la déplace avec une vitesse de 10 cm par seconde.

Le film obtenu est mis à sécher dans une étuve à vide à 50°C sous 20 mm de Hg pendant 30 minutes.

On obtient un film de 30 à 35 µm qui peut être détaché du support et qui présente une conductivité de 10⁻⁷ à 10⁻¹³ S/cm.

### e. Propriétés diélectriques

Les mesures des permittivités diélectriques ε et de la tangente de l'angle de perte, tgδ, à différentes températures et pour des fréquences de 1 à 100 KHz ont été réalisées sur les films décrits ci-dessus. Les mesures ont été réalisées sur des échantillons de 6 cm de surface, métallisées par une couche 500 Å d'aluminium.

Les échantillons sont placés dans une enceinte climatique et les mesures sont effectuées au moyen d'un pont de mesures (type Général Radio n° 1689).

Les résultats sont rassemblés dans le tableau 7.

**TABLEAU 7**

| N° | FILMS proportions | Epaisseur µm | Conductivité S/cm | ε à 20°C | | | tgδ à 20°C | | |
|---|---|---|---|---|---|---|---|---|---|
| | | | | 1 | 10 | 100 KHz | 1 | 10 | 100 KHz |
| 1 | PVDF | 32 | 2,8 10⁻¹ | 5 | 5 | 5 | 0,01 | 0,02 | 0,06 |
| 2 | PVDF/PTHOF 99/1 | 30 | 5,0 10⁻¹⁰ | 7,5 | 7 | 7 | 0,04 | 0,04 | 0,06 |
| 3 | PVDF/PTHOF 90/10 | 35 | 1,0 10⁻⁹ | 15 | 12 | 9 | 0,02 | 0,02 | 0,02 |
| 4 | PVDF/PTHOF 80/20 | 35 | 1,0 10⁻⁷ | 32 | 17 | 10 | 0,60 | 0,40 | 0,35 |
| 5 | PVDF/PTHOF 75/25 | 30 | 2,0 10⁻⁷ | 30 | 15 | 9 | 0,80 | 0,40 | 0,35 |
| 6 | PVDF/PTHOF 65/35 | 30 | 5,0 10⁻⁷ | 60 | 23 | 12 | 3,2 | 1,2 | 0,50 |

### Exemple 6

On réalise un exemple comparable à celui de l'exemple 5, mais en mettant en oeuvre le copolymère VF2-TrFE (75/25) copolymère de fluorure de vinylidène et de trifluoroéthylène en lieu et place du polyfluorure de vinylidène (PVDF).

Les résultats sont rassemblés dans le tableau 8. Les résultats obtenus avec le mélange n^{°} 8 (VF2-TrFE/PTHOF : 20/80) sont illustrés aux figures 1, 2 et 3.

La figure 1 représente les mesures de permittivité diélectrique ε en fonction de la température, mesures effectuées pour 3 fréquences : 1, 10 et 100 KHz.

La figure 2 représente la tangente de l'angle de perte tgδ en fonction de la température, mesures effectuées pour 3 fréquences : 1, 10 et 100 KHz.

La figure 3 représente les mesures de permittivité diélectrique ε en fonction de la température, mesures effectuées pour la fréquence de 100 KHz.

Sur ces trois figures, l'unité de l'abscisse est la température en °C.

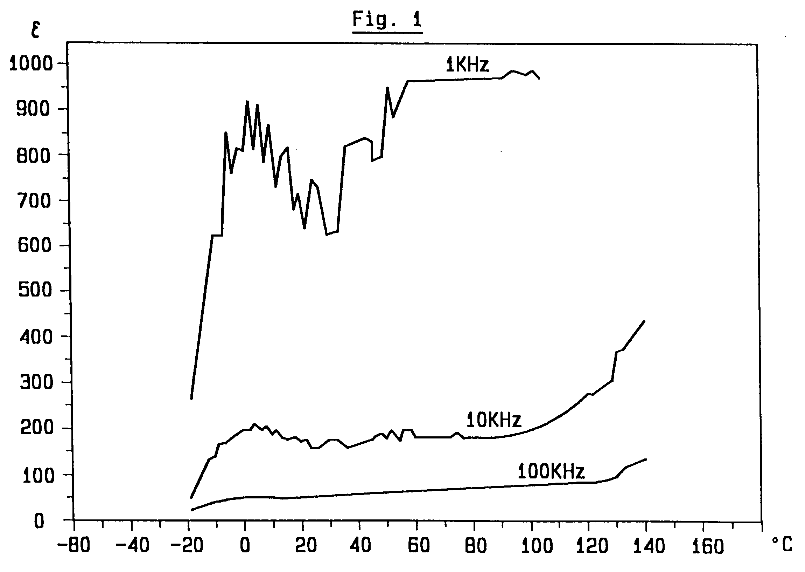

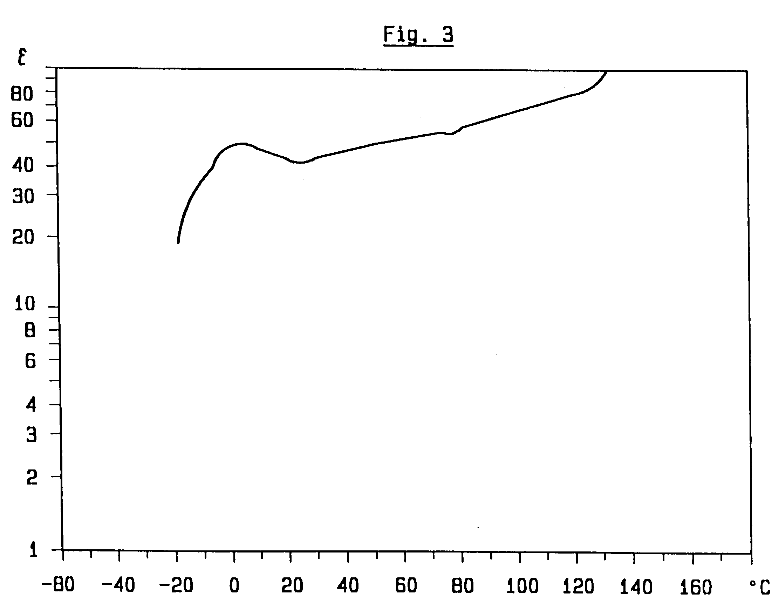

Sur les figures 1 et 3, l'unité de l'ordonnée est la permittivité diélectrique.

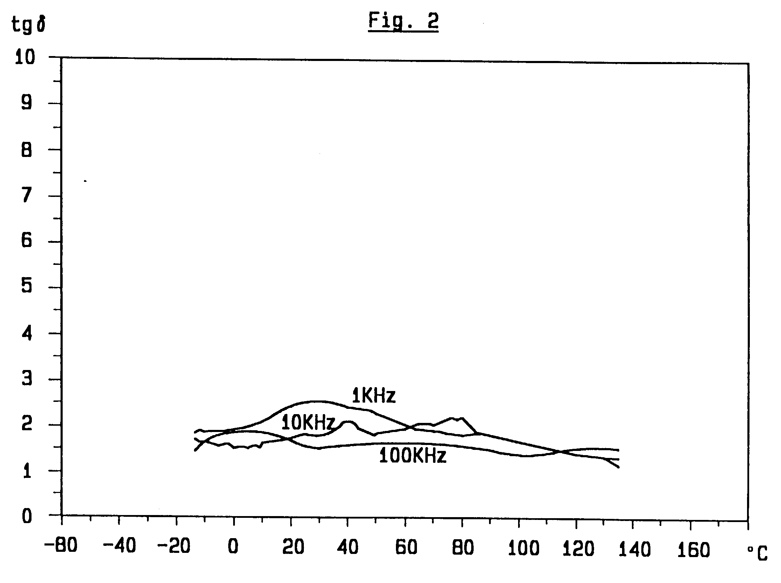

Sur la figure 2, l'unité de l'ordonnée est la tangente de l'angle.

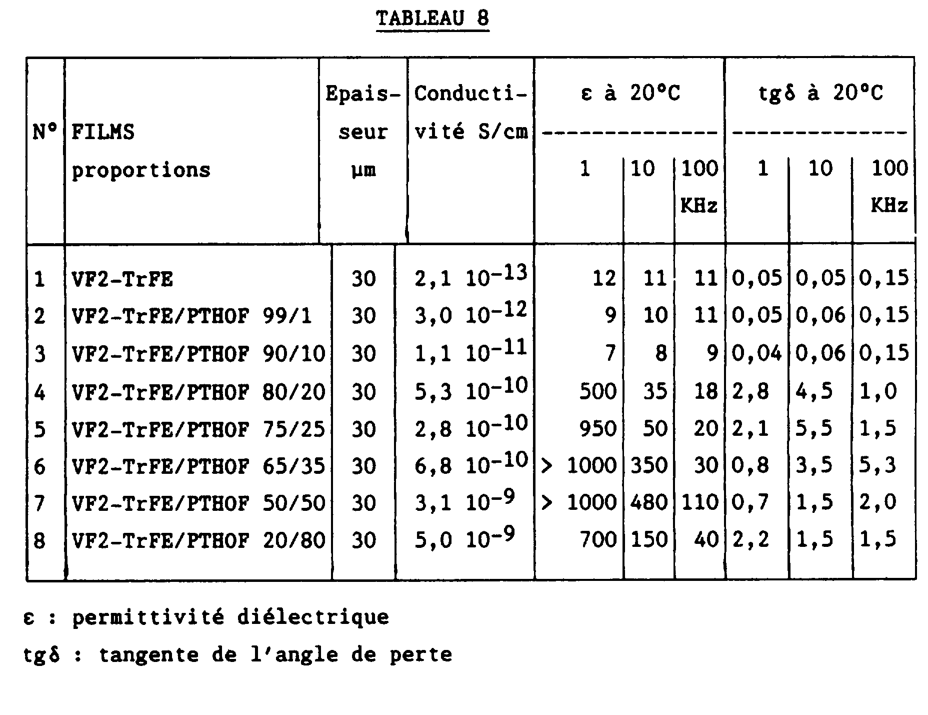

## Revendications

1. Mélange de polymères conducteurs dédopés et de polymères fluorés caractérisé en ce que les polymères conducteurs dédopés présentent une conductivité réduite à une valeur inférieure à 10⁻³ S.cm⁻¹ et que les polymères conducteurs dédopés sont choisi parmi les polyacétylènes, les polypyrroles, les polyindoles, les polyanilines, les polyphénylènes et les polythiophènes.

2. Mélange selon la revendication 1 caractérisé en ce que les polymères polaires sont choisis parmi les homo- et les copolymères du fluorure de vinylidène.

3. Mélange selon la revendication 2 caractérisé en ce que le polymère conducteur est un polythiophène.

4. Mélange selon la revendication 3 caractérisé en ce que le polythiophène est un polymère ayant une chaîne latérale sur le cycle du thiophène.

5. Mélange selon la revendication 2 caractérisé en ce que le mélange contient du poly 4-fluorobenzyl 2- (3'-thiényl) éthyl éther dédopé et un homo- ou copolymère du fluorure de vinylidène.

6. Mélange selon la revendication 4 caractérisé en ce que le polythiophène est choisi parmi les polymères du 3-octylthiophène, les polymères de l'oxyde de 2,2,2-trifluoréthyle et de 3-thiényle, les polymères de l'oxyde de 4,4,4,3,3,2,2-heptafluoro-n-butyle et de 3-thiényle et les polymères de l'oxyde de 8,8,8,7,7,6,6,5,5,4,4,3,3,2,2-pentadécafluoro-n-octyle et de 3-thiényle.

7. Procédé pour l'obtention de mélanges selon l'une quelconque des revendications 1 à 6, caractérisé en ce que l'on met en oeuvre lors de la fabrication de ces mélanges un polymère conducteur dédopé.

8. Utilisation d'un mélange selon l'une quelconque des revendications 1 à 6 pour la fabrication de dispositifs électroniques, optoélectriques, électrotechniques ou électromécaniques.

9. Utilisation d'un mélange selon l'une quelconque des revendications 1 à 6 sous forme d'un film dont l'épaisseur est comprise entre 0,01 et 100 microns.

10. Utilisation selon la revendication 9 caractérisée en ce que les dispositifs sont des capacités qui présentent une permittivité diélectrique élevée et constante dans un domaine de température de 20 à 80 °C et pour des fréquences de 1 à 100 KHz.

## Claims

1. Mixture of dedoped conductive polymers and fluorinated polymers, characterised in that the dedoped conductive polymers have a conductivity reduced to a value lower than 10⁻³ S.cm⁻¹ and the dedoped conductive polymers are chosen from polyacetylenes, polypyrroles, polyindoles, polyanilines, polyphenylenes and polythiophenes.

2. Mixture according to Claim 1, characterised in that the polar polymers are chosen from homopolymers and copolymers of vinylidene fluoride.

3. Mixture according to Claim 2, characterised in that the conductive polymer is a polythiophene.

4. Mixture according to Claim 3, characterised in that the polythiophene is a polymer having a side chain on the thiophene ring.

5. Mixture according to Claim 2, characterised in that the mixture contains dedoped poly(4-fluorobenzyl 2-(3'-thienyl)ethyl ether) and a vinylidine fluoride homopolymer or copolymer.

6. Mixture according to Claim 4, characterised in that the polythiophene is chosen from 3-octylthiophene polymers, 2,2,2-trifluoroethyl 3-thienyl ether polymers, 4,4,4,3,3,2,2-heptafluoro-n-butyl 3-thienyl ether polymers and 8,8,8,7,7,6,6,5,5,4,4,3,3,2,2-pentadecafluoro-n-octyl 3-thienyl ether polymers.

7. Process for obtaining mixtures according to any one of Claims 1 to 6, characterised in that a dedoped conductive polymer is used in the production of these mixtures.

8. Use of a mixture according to any one of Claims 1 to 6 for the production of electronic, optoelectrical, electrical or electromecanical devices.

9. Use of a mixture according to any one of Claims 1 to 6 in the form of a film, the thickness of which is between 0.01 and 100 microns.

10. Use according to Claim 9, characterised in that the devices are capacitors which have a high dielectric constant which is constant within a temperature range of 20 to 80 °C and for frequencies of 1 to 100 KHZ.

## Patentansprüche

1. Mischung aus dedotierten elektrisch leitfähigen Polymeren und fluorierten Polymeren, dadurch gekennzeichnet, daß die dedotierten elektrisch leitfähigen Polymere eine auf einen Wert unter 10⁻³ S.cm⁻¹ verringerte elektrische Leitfähigkeit aufweisen und daß die dedotierten elektrisch leitfähigen Polymere unter den Polyacetylenen, Polypyrrolen, Polyindolen, Polyanilinen, Polyphenylenen und Polythiophenen ausgewählt sind.

2. Mischung gemäß Anspruch 1, dadurch gekennzeichnet, daß die polaren Polymere unter den Homo- und Copolymeren des Vinylidenfluorids ausgewählt sind.

3. Mischung gemäß Anspruch 2, dadurch gekennzeichnet, daß das elektrisch leitfähige Polymer ein Polythiophen ist.

4. Mischung gemäß Anspruch 3, dadurch gekennzeichnet, daß das Polythiophen ein Polymer mit einer Seitenkette am Thiophenring ist.

5. Mischung gemäß Anspruch 2, dadurch gekennzeichnet, daß die Mischung dedotierten Poly-4-fluorbenzyl-2-(3'-thienyl)-ethylether und ein Homo- oder Copolymer des Vinylidenfluorids enthält.

6. Mischung gemäß Anspruch 4, dadurch gekennzeichnet, daß das Polythiophen unter den Polymeren von 3-Octylthiophen, den Polymeren von 2,2,2-Trifluorethyl-3-thienyl-oxid, den Polymeren von 4,4,4,3,3,2,2-Heptafluor-n-butyl-3-thienyloxid und den Polymeren von 8,8,8,7,7,6,6,5,5,4,4,3,3,2,2-Pentadecafluor-n-octyl-3-thienyl-oxid ausgewählt ist.

7. Verfahren zur Herstellung von Mischungen gemäß einem der Ansprüche 1 bis 6, dadurch gekennzeichnet, daß man bei der Herstellung dieser Mischungen ein dedotiertes elektrisch leitfähiges Polymer verwendet.

8. Verwendung einer Mischung gemäß einem der Ansprüche 1 bis 6 zur Herstellung von elektronischen, optoelektrischen, elektrotechnischen oder elektromechanischen Vorrichtungen.

9. Verwendung einer Mischung gemäß einem der Ansprüche 1 bis 6 in Form eines Films, dessen Schichtdicke zwischen 0,01 und 100 Mikrometern liegt.

10. Verwendung gemäß Anspruch 9, dadurch gekennzeichnet, daß die Vorrichtungen Kapazitäten sind, die in einem Temperaturbereich von 20 bis 80 °C und für Frequenzen von 1 bis 100 kHz eine konstante und hohe Dielektrizitätskonstante aufweisen.
